# EUROPEAN PATENT SPECIFICATION

(11) **EP 1 523 263 B1**
(45) Date of publication and mention of the grant of the patent: **14.12.2005**
(21) Application number: 02765327.8
(22) Date of filing: 19.07.2002
(51) Int. Cl.: A47J 31/56

(54) **MACHINE FOR THE PRODUCTION OF HOT WATER, STEAM AND HOT DRINKS**
MASCHINE ZUR HERSTELLUNG VON HEISSWASSER, DAMPF UND HEISSGETRÄNKEN
MACHINE POUR LA PRODUCTION D'EAU CHAUDE, DE VAPEUR ET DE BOISSONS CHAUDES

(43) Date of publication of application: 20.04.2005
(73) Proprietor: Gruppo Cimbali S.p.A., 20082 Binasco (MI) (IT)
(72) Inventor: BERETTA, Maurizio, I-20082 Binasco (IT)
(74) Representative: Cattaneo, Elisabetta
(86) International application number: PCT/IT2002/000476
(87) International publication number: WO 2004/008926

(56) References cited:
- GB-A- 1 470 524
- US-A- 5 372 061

## Description

The present invention relates to an apparatus equipped with a boiler and possibly individual heaters for producing hot drinks such as coffee, cappuccino, tea, punch and the like.

Such an apparatus is equipped with a central control system programmed to govern the functions which are necessary to the preparation of said drinks (delivery of hot water, steam, reloading and heating of a corresponding amount of cold water) which, taking into account the reactive capacities of the individual sensing elements, of the operating logic of each process and of the reciprocal negative influences, acts so as to effectively exploit the performances of said apparatus.

### PRIOR ART

It is known that machines for making espresso coffee and hot drinks commonly used in public places comprise a saturated steam boiler (and possibly one or more auxiliary boilers) for the instant delivery of hot water, steam and for the preparation of coffee.

The use of the boiler as heat generator and accumulator is particularly advantageous because it allows various services to be rendered, generally instantly and without delays, upon request, with a single control system and a single heating apparatus using a lower power than that which there would be by sizing separate apparatuses each equipped with the heating power necessary for each individual function (coffee, water for tea, steam). This is possible because, usually, the carrying out of the various services takes place in an alternating manner. For example, if the person operating the machine is preparing coffee, it does not prepare tea and if it has to heat milk for cappuccino it shall do so after having prepared coffee.

With this type of mainly sequential work, a heat source with low power and heat capacity is capable of alternately satisfying the requirements of the various services. When, however, this type of apparatus is used in stations subject to intense working peaks, with the presence of numerous operators, there can be simultaneous and uncoordinated combinations of services which put the system into crisis.

A practical example shall be seen later on.

If the use of the single boiler or generator has undisputed advantages of compactness and simplicity, it still has a problem of incompatibility of the necessary temperatures with the production of high thermal-content steam (>120 °C) and those necessary for the preparation of high quality espresso coffee (< 100°C).

This drawback can be overcome by foreseeing many separate boilers or generators, suitably sized and dedicated to each individual function or to groups of functions, for example a generator for coffee, one for hot water and one for steam or else one for coffee and hot water and one for steam, or otherwise one or more for coffee and one for hot water and steam. In this case, however, the power used which is the sum of the electrical powers dedicated to each individual generator substantially grows and can give rise to unacceptable overcharging, to avoid which, as proposed in US-A-5,408,917, an integrated management system is foreseen which activates the different heating elements in ordered succession, according to a programmable order of priority.

In any case the control of the temperatures and, possibly, of the level of water in the boiler takes place with control loops which are independent from each other and, as we shall see, can easily cause conditions of thermal collapse of the apparatus.

To retain the use of the single boiler and to overcome the problems linked to the temperature of the coffee, more or less complex systems based upon the use of heat exchangers integrated in the single boiler have also been developed. These systems in any case are not capable of bearing variable working rhythms with constancy of thermal response.

In both cases the problem remains of overcoming the peaks in demand without excessively increasing the electrical power used.

The expedient conventionally used for this purpose consists of sizing the boiler with a certain heat accumulation which allows the peaks in heat demand to be overcome.

However, the thermal flywheel also has its drawbacks.

Indeed, increasing the thermal capacity also means increasing the inertia, making the apparatus less ready to respond and worsens the negative aspects of the intervention hysteresis of the control devices and of the time constants of the sensors (essentially level and temperature or pressure sensors).

Thus the greater thermal capacity and inertia, if on the one hand allows the highest peaks in charge to be borne, on the other hand reduces the ability of the system to rapidly get back to the normal operating conditions and does not allow the electrical power installed to be fully exploited.

For example, the delivery of 500 grams of hot water replaced by a corresponding amount of cold water shall be recognised more quickly by the control system of a boiler with an accumulation of 5 kg of water than that of a boiler with an accumulation of 10 kg.

If in ordinary use, due to hysteresis,to the presence of more or less big thermal flywheels and to the thermal time constants of the sensors, the heating elements remain inactive, for example for 20% of the time, at the end of one hour of very intense work, an apparatus equipped with a heating element with a power of 5 kW (thus capable of delivering 5 kWh in one hour) shall in reality have delivered only 4 kWh, i.e. it will have given a performance with a certain degree of inefficiency.

An accurate design can also limit the influence of delays in response of the sensing control elements such as those described in GB-A-1,470,524 but, since such delays depend upon the thermal time constants of the sensing elements themselves and upon the thermal masses involved, to a certain degree they have always been the cause of more or less big inefficiencies.

### SUMMARY OF THE INVENTION

The present invention solves these problems and provides an apparatus for producing hot drinks such as coffee, tea, cappuccino and the like, in which the hot water and the steam necessary for said drinks are produced by a steam generator, possibly combined with a heat exchanger or else with a separate boiler for producing coffee, governed by a central unit, programmed to operate with "intelligent" management of the resources which optimises its efficiency without weighting down the apparatus with excessive flywheels and/or installed powers.

The characteristics of the invention are specified in the attached claims and here we indicate the basic criteria used in the control system.
1) Immediate intervention of the control devices for level reintegration and thermal content:
   when a delivery of hot water is performed, knowing that this process shall start up, with a delay determined by the inertia or by the hysteresis of the sensors, the entry of replacement cold water, the central controller immediately activates the heating without waiting for the temperature sensor to cool down and consequently causes the activation of the heating.
   At the same time, it activates the entry of cold water for level reintegration.
   In this way all of the start-up delays can be zeroed whereas the sensors still maintain a surveillance function over the general state of the unit to guarantee its safety.
   The same criterion, without the entry of reintegration water can be used in the case of steam delivery. Indeed, steam delivery, still involving modest water consumption, draws a substantial amount of heat out of the boiler.
2) Slaving the water level reintegration function to the temperature regulation function:
   when an amount of hot water is taken from the boiler, the conventional level control systems operate unconditionally to restore an amount of cold water corresponding to that which was taken away in the boiler, though with a delay determined by the hysteresis of the sensors. If such an amount is comparable in volume to the content of the boiler, also with active heating, there can be a temporary collapse in the temperature and pressure which makes the apparatus temporarily unusable for certain functions, like for example the delivery of steam.
   In this case the performances can be improved by making the level restoring process be governed in an "intelligent" manner by the central control unit. Indeed, once the level of temperature and/or critical pressure below which there is a degradation of the performance has been determined and once a level above which the performance is good has been determined, through the temperature (or pressure) sensors the thermal state of the boiler can be monitored and the central controller can temporarily stop the level restoring process when the temperature (or pressure) falls below the predetermined critical value starting to fill up again when it has risen above the acceptable value.
   Thus one avoids even temporarily sending the boiler into conditions of thermal collapse keeping it always ready to deliver steam with good thermal content.
3) Limitation in the electrical power absorbed:
   - together with the control criteria outlined above the electrical power absorbed can be limited, as proposed in US-A-5,408,917.

If, for example, the apparatus comprises a main steam boiler and 2 coffee dispensers and, to be able to govern their temperatures independently, the coffee dispensers are equipped with heaters separate from those of the steam boiler, the cumulative power installed can become high.

For example, given sizing characteristics of an apparatus for intense production are: 1, 5 kW for each heater for coffee and 4,5 kW for the hot water and steam boiler. When the heating elements function simultaneously the powers add together and thus it is necessary to size the supply line of the machine for peak powers of 7,5 kW.

Also in this case through the central controller the maximum power required by the machine can be limited by ensuring that some heating elements act in an exclusive manner with respect to others.

Usually, the heater of the steam boiler is already normally subdivided into three elements to supply the external supply network, which may be three-phase, with a charge which is as symmetrical and balanced as possible.

If the central controller is programmed to assign each of the coffee heaters with an exclusive function with one of the heating elements of the boiler, with priority to the governing of the coffee function, leaving the unconditioned heating by exclusions to just one of the heating elements of the boiler, the maximum power absorbed can be limited to just 4,5 kW instead of the 7,5 kW which are present adding together the power of each element.

In this way there will be the same power which would be used with a single generator but an independent management of the temperature of the heaters for coffee is maintained.

The characteristics and advantages of the invention shall become clearer from the following description of a preferred embodiment given with reference to the attached drawings in which:
- figure 1 is a block diagram of a machine for preparing hot drinks of the prior art;
- figure 2 is a state diagram which describes the level reintegration function in the machine of figure 1;
- figure 3 is a state diagram which describes the pressure/temperature restoring function in the machine of figure 1;
- figure 4 is a block diagram of a machine for preparing hot drinks in accordance with the present invention;
- figure 5 is a state diagram which describes the operation of the machine of figure 4;
- figure 6 is a comparative time diagram of the evolution of the temperature/pressure in the machines of figures 1 and 4 during the course of an example of an operating cycle, which is identical for both machines;
- figure 7 is a time diagram which shows, with reference to the operating cycle of figure 6, the different steps of activity of the machine of figure 1;
- figure 8 is a time diagram which shows, with reference to the operating cycle of figure 6, the different steps of activity of the machine of figure 4;
- figure 9 is a block diagram of a variant of the machine of figure 4.

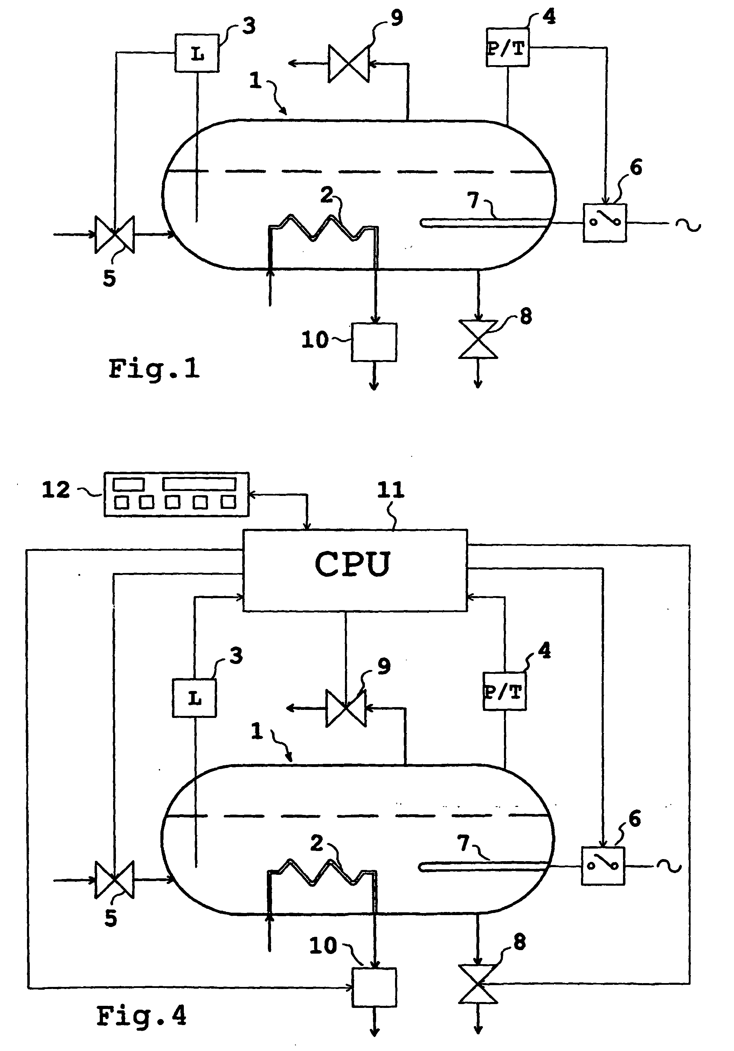

For a greater appreciation of the invention figure 1 represents a block diagram of a machine for producing hot drinks of the prior art, for the sake of simplicity of the type in which the heating of the water for coffee takes place through a heat exchanger.

The machine comprises a saturated steam boiler 1, a heat exchanger 2 (for preparing coffee), a transducer-indicator 3 of the level of the boiler L, a transducer-indicator 4 of the pressure and/or temperature of the boiler P/T, a device 5 (generally an electrovalve) for refilling the boiler, devices 6 (generally electromagnetic or solid state switches) for controlling the heating elements 7 of the boiler (generally three, to allow feeding thereof with a three-phase network), a hot water dispenser 8 (generally a mixer electrovalve with cold water to avoid boiling), a steam delivery lance 9 and a coffee dispensing device 10 (or many dispensers).

As an example, the machine of figure 1 can have the following characteristics:
- volume of the boiler 1: 5 litres,
- volume of water at normal level (HL): 3 litres,
- volume occupied by steam: 2 litres,
- heating power of the boiler: 4500 W (1,075 Cal/s),
- operating pressure (HP) : 1.2 bar, corresponding to a temperature of about 123°C
- flow rate of the boiler refill device 5: 0.014 1/s,
- flow rate of hot water dispenser: 2 1/min (0.033 1/s)
- average response delay of the boiler level and pressure/temperature transducers-indicators: 10 s.

The flow rate of the steam delivery lance, which can be expressed in terms of steam flow rate (g/s) or more significantly in terms of thermal power delivered, with a good approximation equal to the product of the specific condensation/evaporation heat (in the range between 100°C and 123°C about 540 Cal/kg, i.e. 4.18•540 kJ/kg) for the steam flow rate expressed in weight, is variable according to the boiler pressure: obviously zero for no relative pressure in the boiler, it varies, in close approximation, linearly from 0 to 2,5cm³/s in the range of relative pressures between 0 and 1.2 bar and generally, in the range between 1 and 1.2 bar, corresponds to a thermal power delivered of 1.2 Cal/s (about 5 kW).

The boiler 1 is controlled by two control loops which are independent from each other: the pressure/temperature transducer 4 controls the device 6 for powering the heating elements if the pressure/temperature in the boiler falls below a first predetermined value LP (for example 1 bar relatively) and to remove the supply if the pressure exceeds a second predetermined value HP (for example 1.2 bar).

The two values LP and HP can coincide and can be chosen so that overshoots in regulation, due to the delayed response of the transducer are contained within acceptable limits. For example, it may be convenient to make HP=LP and to make them correspond to 120°C.

The level sensor 3 controls the device 5 for supplying the boiler with cold water if the level in the boiler falls below a predetermined value LL, for example corresponding to 2.7 litres, and interrupts the supply if the measured level reaches a second value HL, for example corresponding to 3 litres.

Also in this case LL and HL can coincide and conveniently can correspond to a liquid volume in the boiler of 2.85 litres.

There is no interaction between pressure/temperature regulation and level regulation, which are both of the intermittent ON-OFF type, possibly with a suitable dead band to avoid an excessive frequency of intervention of the control devices. The hysteresis of the transducers produces an equivalent effect.

Each control loop acts independently from the other with logic which strictly depends, in an unequivocal and repetitive manner, upon the characteristics with which the member which detects the value of the quantity to be controlled and the actuator which governs said quantity have been designed.

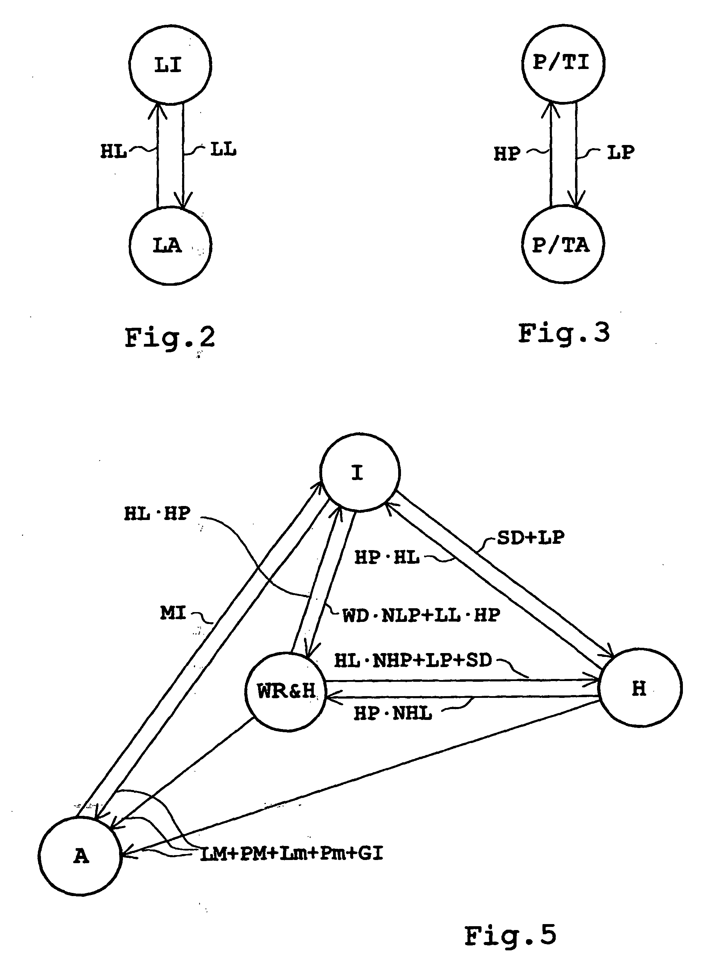

The behaviour of the system is effectively and synthetically described by two distinct Petri networks or finite state machines shown in figures 2 and 3.

The level control function (fig.2) has just two possible states: inactive LI or active LA.

From the state LI the machine steps to the state LA if the condition LL is true, i.e. if the signal LL is asserted and returns to the state LI if the condition HL is present, i.e. the signal HL is asserted.

In the case of HL=LL the condition HL corresponds to LL de-asserted.

In the same way (figure 3) the pressure/temperature control function (in a saturated steam boiler pressure and temperature are bi-univocally correlated) has just two states: inactive P/TI and active P/TA.

From the state P/TI the machine steps to the state P/TA if the condition LP is true, i.e. if the signal LP is asserted and returns to the state P/TI if the condition HP is true, i.e. the signal HP is activated.

In the case of HP=LP the condition HP corresponds to LP de-asserted.

It can be noted that the delivery of coffee, hot water or steam have no direct effect upon the state of the two machines and there is no mutual interaction between the states of the two machines.

By comparison figure 4 represents a simplified block diagram of a machine for producing hot drinks realised in accordance with the present invention. In figure 4 the elements which are functionally equivalent to those of figure 1 are identified with the same reference numerals.

The machine comprises a saturated steam boiler 1, an exchanger 2, a transducer-indicator 3 of the boiler level, a transducer-indicator of the boiler temperature/pressure parameter, an actuation device 6 of the heating elements 7 of the boiler, a hot water dispenser 9 and coffee dispensing devices 10.

Moreover, it comprises a control system with a central processing unit or CPU 11 and a command keypad 12.

The components are substantially the same as the independent loop control of figure 1 and they have the same characteristics of flow rate and response time.

In this case, however, all of the information detected by the transducers 3, 4 is sent to the CPU which controls not only the heating and filling of the boiler in an interactive manner, but also all of the other functions carried out by the apparatus.

In particular, the activation of the dispensing devices 8,9,10 can be controlled by the CPU according to commands received through the keypad 12 (alternatively the keypad 12 can directly command the devices 8,9,10 but at the same time send a corresponding signal to the CPU), so that the CPU can recognise the dispensing operations which are required, can control their execution and, according to the operations in progress or which are orderly programmed and according to the state of the system, it can manage the level and temperature restoring operations in an optimal manner, so as to minimise the reciprocal negative influences linked to the carrying out of the various functions.

In particular, the CPU, according to the different services required, can anticipate the activation of the level and/or temperature/pressure restore commands, without waiting for the intervention of the level and temperature/pressure sensors, getting rid of the consequent delays.

Moreover, it can subordinate the execution of level restoring operations to the presence in the boiler of a pressure HP which constitutes a nominal maximum working pressure and suspend the level restoring operation if the pressure falls below a minimum threshold LP of efficiency for the steam dispenser.

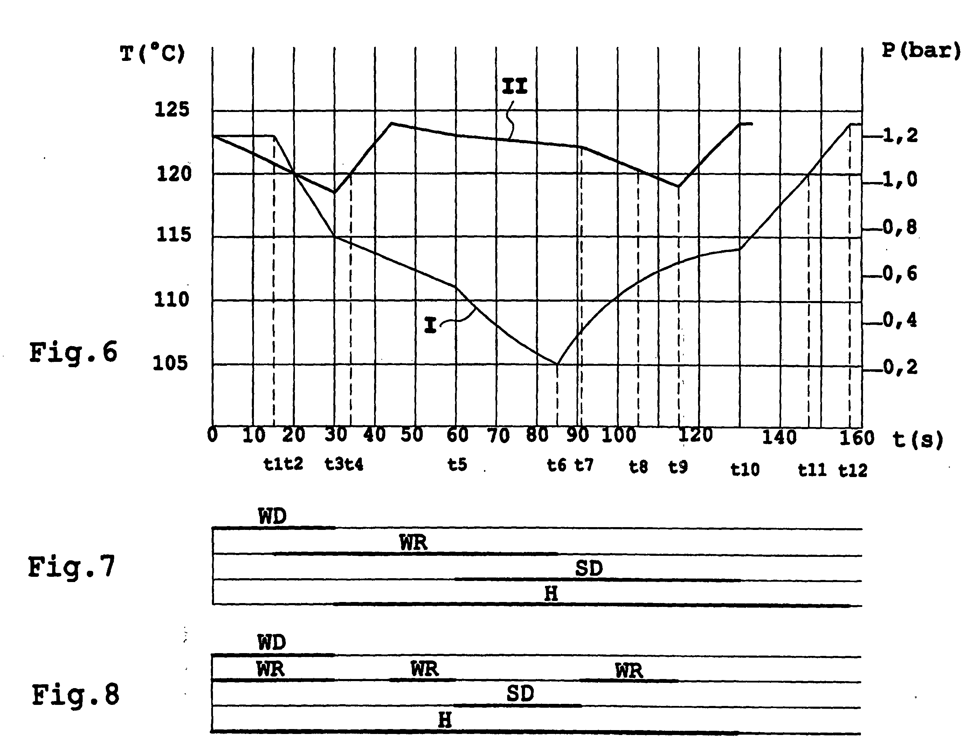

Even in this case the operation of the system can be effectively and synthetically described by a state machine like the one represented in figure 6.

The machine fundamentally has three states: inactive (I), active in heating and water reloading (WR&H) and active only in heating (H).

In figure 5 the conditions which, when even only temporarily present, give rise to the changes in state, are identified by the following acronyms:
- HL level in the boiler normal (high),
- HP pressure in the boiler normal (high),
- LL level in the boiler low,
- LP pressure in the boiler low,
- WD active hot water dispenser signal, .
- SD active steam dispenser signal,
The symbol "." has the meaning of AND logic operator.
The symbol "+" has the meaning of OR logic operator.
The letter "N" which precedes an acronym has the meaning of inversion logic operator (NOT).

In the case in which there is HL=LL and HP=LP it is clear that LL=NHL and LP=NHP.

One can immediately note that the machine steps from the inactive state I to the WR&H state as soon as a water dispensing takes place (WD asserted), so long as the pressure in the boiler is not low (NLP asserted) or else, independently from any water dispensing, in the case of the level in the boiler being low (LL asserted) together with the pressure being high (HP asserted).

Already in this the system shows a different behaviour to that of the prior art, because in addition to the activation of the water refill and heating by effect of the signal LL asserted, the water refill and the heating are immediately activated as soon as a hot water dispensing operation is commanded and with this the response delays of the sensors are suppressed.

Moreover, unlike the prior art, even in the case of LL activated, the transition in state is subordinated to the condition HP asserted.

From the state WR&H the machine returns to the state I if both of the conditions HP and HL are true.

However, the machine can also leave the state WR&H to pass into the state H if the condition HL.NHP is present or else the condition LP is true (in the case in which LP=NHP the two conditions are the same) or else the condition SD is true.

From the state H the machine can return to the state WR&H once, by effect of the heating, normal working pressure HP is reached if the high level condition is not present (NHL true)

Finally, from the state I the machine can step to the state H when there is a low pressure condition (LP true) or else if a steam dispensing is activated (SD true)

In the case of steam dispensing there is a substantial subtraction of heat from the boiler, whereas the actual water consumption is negligible: an immediate restoration of the thermal content of the boiler is therefore necessary, whereas the possible restoration of the level can be deferred to the moment in which the pressure HP has been reached.

From the state H it can then return to the inactive state I when both of the conditions HP and HL are true.

The state H does not rule out the possibility of carrying out hot water dispensing: in this case the machine simply does not change its state.

Indeed, the entry of cold water into the boiler for level reintegration would have the consequence of a further reduction in pressure: therefore it is necessary to first take care of the restoration of the pressure and only afterwards that of the level. In other words if hot water dispensing is commanded when the machine is already in the state H, the machine remains in the state H.

Figure 5 highlights the complexity of the interactions which develop in the control system of the present invention: in fact the regulation system is even more complex because besides the interaction between water and steam dispensing, level control and pressure/temperature control the CPU intervenes blocking the operation of the boiler or of certain functions in the case of detection of anomalous or inadmissible situations, which are also signalled, for example regarding the level or pressure, which in operating conditions must in any case be contained between a maximum value LM, PM and minimum value Lm, Pm, or even gradients GI (variations in level or pressure in time) which are inconsistent with the operations in progress.

In schematic form, to take account of these events, the state diagram of figure 5 is added to with the addition of a state A of alarm and/or block to which it passes, from one of the other states, when any of the events indicated above occurred (LM,PM, etc.).

In general, from the state of alarm the machine returns to the inactive state I only with a manual intervention MI by the operator.

For greater clarity we shall now provide an example of operation.

Let us suppose that the machine initially is in the inactive state I in conditions of normal pressure (NLP true or, in the case where LP=HP, HP is true e.g. asserted).

To keep the efficiency of dispensing of the steam boiler 1 at a maximum the CPU 11 of figure 4 is programmed to govern the equipment with the following logic:
- when the hot water dispenser 8 is activated the heating command and the boiler refill command is also immediately activated, i.e. the machine steps from the state I to the state WR&H (fig.5).
- to ensure safety, the CPU continues to monitor the pressure/temperature sensor transducer 4 and the level sensor 3. The first must not in any case signal that a maximum safety pressure PM has been exceeded. Moreover, since the simultaneity of the dispensing process with a flow rate of 0.033 litres/s and of the refilling process with a flow rate of 0.014 1/s produces a negative balance, within a certain maximum period of time the second must detect the lowering of the boiler level. If this does not happen due to some abnormal operation, the CPU 11 has to appropriately signal the problem through the suitable output interfaces (display, sound warnings etc.) and has to deactivate the commands which can leads to situations of malfunction.

In this case the machine would pass to state A.
- If the transducer 4 detects a lowering in the boiler pressure below the minimum efficiency threshold for steam dispensing, for example 1 bar, the CPU deactivates the refill command (the machine steps to state H of fig.5) to reactivate it (and to return to the state WR&H of fig. 5) only when the pressure has once again risen to the upper efficiency threshold HP, for example 1.2 bar.
   In this way it is avoided that the entry of cold water in a single solution overly absorbs the heat produced by the heating resistances, causing a fall in pressure which would preclude a possible steam dispensing. The internal atmosphere of the boiler always remains ready to respond efficiently to the requirements of the dispensers, water or steam, subordinated to the single condition that the water level in the boiler does not fall below Lm.
- also in this case the CPU keeps a surveillance over the possible abnormal operations taking into account a safety time out, for example 5 minutes, beyond which the pressure must anyhow rise to normal operating values and the refill must be completed.
   To fully appreciate the advantages of the invention figures 6,7,8 jointly show a time diagram, for immediate comparison, of the behaviour of a conventional machine, like the one of figure 1 and that of a machine like the one of figure 4, having the same thermal characteristics, already specified, but controlled in an intelligent manner according to the invention.

It is assumed that the intervention pressure of the pressure/temperature transducer is HP=LP = 1.05 bar corresponding to about 120°C and that the intervention level is LL=HL corresponding to a liquid volume of 2.851.

Let us suppose that at a starting time, with a relative pressure in the boiler of 1.2 bar, thus a temperature of 123°C, an operator commands the dispensing of 1 litre of hot water to make a series of teas and after 1 minute a second operator starts carrying out the heating of 0.5 litres of milk to prepare some cappuccinos.

To heat 0.5 1 of milk from refrigerator temperature (5°C) to 80 °C it is necessary to supply the milk (specific heat of about 1 Cal/kg°C) with 37,5 Cal (i.e. 4.18•37.5 kJ) in the form of steam condensation heat.

In figure 6 the diagrams I and II represent in order the temperature of the water in the boiler and the corresponding pressure of the steam at varying times (X-axis) in seconds, respectively in the case of conventional control and in the case of intelligent control, according to the present invention.

The diagrams WD, SD, WR, H of figure 7 represent, in the same time scale of figure 6, the active state, respectively, of dispensing hot water (WD), dispensing steam (SD), water refill (WR) and heating (H) in the case of conventional control.

The diagrams WD,SD,WR,H of figure 8 represent, in the same time scale of figure 6, the active state, respectively of hot water dispensing (WD), steam dispensing (SD), water refill (WR) and heating (H) in the case of control according to the present invention.

With a water dispensing flow rate of 0.033 l/s the dispensing of one litre takes place in 30 seconds in both cases, starting from a starting time t0.

With a steam flow rate equal to 1.3 Cal/s (4,18•1,3kJ) which there would generally be in normal conditions of relative pressure, between 1 and 1.2 bar, the time necessary to heat half a litre of milk would be 35s, but here there are substantial differences in behaviour.

Let us first examine the behaviour of the system in the case of conventional control:
a) by effect of the dispensing, after about 5 s the liquid volume in the boiler reduces to 2.851,
b) at the time t1, after 15 s from the start of the cold water dispensing and after 10 s from the threshold of 2.851 being reached, the level transducer 3 activates the refill with cold water, for example at 23°C, and the water in the boiler starts to cool down due to the colder water which has been brought.
   Since the refill flow rate is 0.014 1/s about 70 seconds are needed to refill the boiler with one litre of water and to restore the initial level.
c) at the time t2, after about 20 s from the starting time, 0.66 1 of not water have gone out and 0.07 1 of cold water have gone in.
d) at the time t3, after 10 s from the time t2 due to the delay in response of the transducer, the cooling caused by the cold water on its way in is detected by the transducer 4 and determines, through the CPU, the activation of the heating.

The temperature of the water and the corresponding pressure in the boiler can be calculated, moment by moment, taking into account the initial thermal content of the boiler, referring to an arbitrary temperature, for example 23°C, the amount of heat subtracted or brought with the different operations (dispensing, refilling, heating) and the amount, variable in time, of the liquid plus steam in which the thermal content of the boiler, also variable in time, is distributed.

The variations in volume and thermal content of the steam can be ignored since they have secondary effects upon the thermal balance.

Without plunging into calculations, it should be observed, from diagram I, that at the time t2, the temperature in the boiler is 120°C and corresponds to the intervention threshold of the transducer 4.

At time t3, when the heating starts (and the dispensing is complete), the temperature has already fallen to about 115°C and also in the subsequent step continues to fall.

At time t5 (60 s from the start), when a second operator starts the steam dispensing, the temperature has further fallen to about 111°C, as can be seen from the thermal balance, and continues to fall for bringing further cold water and by effect of the steam dispensing which subtracts further thermal content from the boiler.

At time t6 (85 s from the start), when the water reintegration operation is complete, the temperature has further fallen to about 105°C.

Temperatures of 111°C and 105°C correspond to a relative pressure of about 0.5 e 0.25 bar respectively.

In these conditions the flow rate of the steam dispenser is minimal and is between 0.2 and 0.5 Cal/s (0.2-0.5•4.18 kJ).

Only from time t6, when the thermal heating brought exceeds the subtraction of heat as a consequence of the steam dispensing and there is no longer cooling caused by the entry of cold water, do the temperature and pressure start to rise with non-linear laws (logarithmic).

In practice, it can be experimentally found and analytically calculated that, to complete the heating of the milk, it is necessary to keep the steam dispensing active for all of 70 s, up until time t10 = 130 s from the start.

At this point the temperature in the boiler is about 114°C and to restore the initial thermal conditions it is necessary to keep the heating active for about a further 25 s, up until time t12.

In fact, the threshold temperature of 120° is reached shortly beforehand, at time t11 (about 147 s from the start) and for the inertia of the transducer the heating is interrupted at time t12, after 157 s from the start, when the temperature of the water is slightly greater than 123°C (about 123.5°C).

Basically the process requires 2 minutes and 35-37 seconds to come to an end and the heating of the milk requires a substantial amount of time (70 s).

This is due to the thermal collapse of the boiler.

Totally different is the behaviour of the boiler in the case of intelligent control, represented by the diagram II.

The CPU immediately associates the activation of the refill command of the boiler with the dispensing process without waiting for the signal from the transducer 3.

At the same time the heating of the boiler is activated without waiting for the signal from the transducer 4.

For safety reasons, the CPU shall continue to monitor the state of the transducers 3 and 4 which must in any case signal the lack of water and/or anomalous pressure conditions within a defined safety time.

Since the thermal heating effect does not compensate the refrigerating effect due to the entry of cold water the temperature in the boiler falls linearly and at time t2 is equal to 120°C, corresponding to the threshold intervention temperature.

With a delay of 10 s, i.e. at time t3, this temperature is detected by the transducer 4 and is transmitted to the CPU which, so as not to make the pressure/temperature fall further, stops the refilling process, keeping just the heating active..

In the mean time the temperature has fallen further to about 118.5°C.

From time t3 the temperature in the boiler rises and at time t4, about 34 s from the start, it exceeds the threshold level of 120°C.

After 10 s, due to the delay of the transducer, the CPU recognises the restoration of the normal conditions and reactivates the water refill operation. In the mean time the temperature in the boiler has risen further, to about 124°C.

At time t5, after 60 s from the start there is the following water (A) and thermal (B) balance (referring to the temperature of 23°C):
A) hot output water: 1 litre
   could input water: 0.014•(30+16)= 0.63 litres
   liquid in the boiler: 2.63 litres
B) initial thermal content: 300 Cal (4.18•300 kJ)
   heat drawn out by dispensing: 100 Cal (4,18.100 kJ)
   input heat: 1.075•60 = 64.5 Cal
   final thermal content: 264.5 Cal (4.18•264.5 kJ)
This thermal content distributed on 2.63 litres determines an overheating, relative to 23°C, equal to about 100°C, so that the actual temperature of the water in the boiler is 123°C.

At this point the second operator starts to heat up the milk.

The steam dispensing takes place with an optimal pressure in the boiler, which initially corresponds to a steam flow rate, expressed in calories/sec equal to about 1.3 Cal/s (5.44 kW), thus greater than the heating power installed.

The CPU then suspends the cold water refill process for all of the time in which the steam dispensing is in progress, keeping the heating active.

At time t7, after about 31 s the steam dispensing process ends and the temperature in the boiler is about 122°C, as can easily be calculated.

Since the temperature is greater than that of the threshold, the CPU reactivates the water reintegration process in the boiler and the temperature starts to fall again.

At time t8, after 14 s the threshold temperature is reached and 0.014•(30+16+14) = 0,9 litres of water have been loaded.

At time t9, after a further 10 s (due to the usual delayed response of the transducer), during the course of which the temperature falls further to about 119°C and the water refill comes to an end, the CPU suspends the water refill if not completed, keeping the heating still active.

The threshold temperature is again exceeded and, with the hysteresis due to the transducer, at a time t10 which is set at around 130 s from the start the CPU stops the heating process and goes into inactive state awaiting new commands.

The duration of the cycle was 2 minutes and 10 seconds, therefore shorter than the previous case and the heating of the milk was carried out in just 31 seconds, with the machine still in normal working conditions and capable of simultaneously offering other services to the operations carried out, like coffee dispensing, with repeatable results, because they are not influenced by appreciable variations in temperature.

Regarding this it is suitable to underline that the control logic described with reference to a boiler like the one of figure 4A also has an advantageous use in the case of a machine for hot drinks in which the dispensing of the coffee takes place from one or more auxiliary heaters, each heated by its heating element.

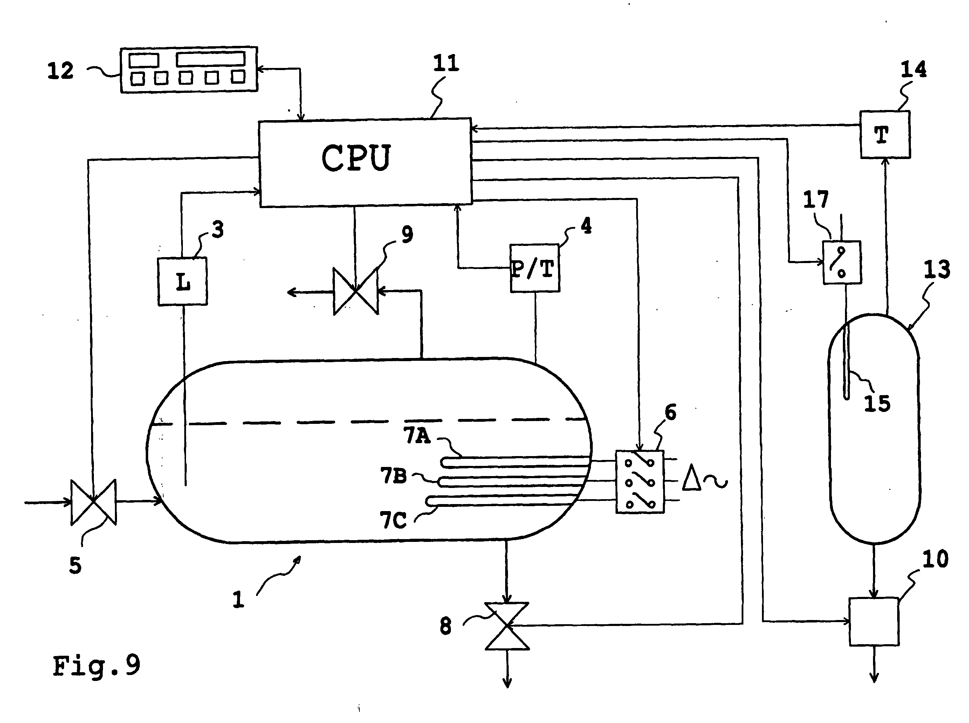

Figure 9 represents a block diagram of a machine of this type.

Besides the components of figure 4, in figure 9 identified with the same reference numerals of figure 4, the machine of figure 9 comprises at least one auxiliary heater 13 (preferably two), for heating the water intended for preparing coffee.

Typically, the capacity of the heater is 0.9 l.

The heater 13 is equipped with a temperature transducer 14, which typically has a response delay of 10 seconds, with a coffee dispensing device 10, with a heating element 15, with a power of 1.5 kW, supplied through a switch device 17.

The entry of water into the heater takes place automatically by depression in the heater, concurrently with the dispensing.

Also in this case, instead of leaving the activation of the heating to the detection of a temperature lower than the threshold, with the consequent intervention delays, it is possible, by means of the CPU, to activate the heating each time a dispensing takes place, possibly subordinating the activation of the heating to the condition that the temperature in the heater is less than an upper threshold.

Thus the intervention delays are zeroed and a greater thermal constancy is ensured.

Moreover, the CPU, if the machine is in heating state H of the -boiler, immediately before commanding the activation of the heating element of the auxiliary heater 13, can control the power absorbed by the boiler excluding one or more of the heating elements 7A, 7B, 7C thereof so as to limit the cumulative electrical power absorbed at a predetermined value.

Only when the heating element of the auxiliary heater 13, or of the heaters, if more than one, is deactivated, the CPU goes back to command the heating of the boiler 1 at full power.

It is clear that independently from the dispensing of water by the heater 13, by effect of the inevitable heat dispersions, the transducer 14 can detect a temperature of the heater which is less than a predetermined lower threshold value.

Also in this case, instead of directly activating the switch device 17, the transducer 17 sends the information to the CPU which, before activating the heating element 15, verifies the active/inactive state of the different heating elements 7A, 7B, 7C of the boiler.

If all of the heating elements are active one of these is deactivated and immediately afterwards the heating element 15 of the auxiliary heater 13 is deactivated.

Only when the heating element 15 is deactivated, upon the signal of the temperature transducer 14 that the upper temperature threshold has been reached, the heating in the boiler is brought at full power, if still necessary.

In the same way, before activating the heating in the boiler at full power, the CPU 11 verifies that the heating element 15 is not active.

The previous description has referred to the specific case in which the inertia of the level and pressure/temperature sensors worsens the drawback of thermal collapse.

However, it is clear that the drawback also exists with the use of sensors with a very short or immediate response time. Indeed, besides the inertia of the sensors it is due to the thermal unbalance between heating power and peaks in thermal load being dispensed.

## Claims

1. Machine for producing hot water, steam and hot drinks, of the type comprising a saturated steam accumulation boiler (1), a steam dispensing lance (9), a hot water dispenser (8), a first transducer (3) for monitoring the water level in the boiler, a second transducer (4) for monitoring a pressure/temperature paramiter in the boiler, at least one heating element (7) of the water in the boiler, a refill device (5) of the water in the boiler, a command device (6) of the heating element, a control system (11,12) with a central processing unit (12) which, in response to the activation of a hot water dispensing operation, immediately activates said command device (6) of the heating element (7) and, if the temperature/pressure parameter in the boiler, monitored by said said second transducer (4), is greater than a predetermined lower threshold value (LP), also activates said refill device (5), keeping it active in the time intervals in which the temperature/pressure parameter in the boiler, monitored by said second transducer (4) is greater than said lower threshold value (LP), until the restoration of a high level (HL) of water in the boiler recognised by said first transducer (3) and deactivating said command device (6) of the heating element (7) only when the water level in the boiler has been restored and the pressure/temperature of the boiler, monitored by said second transducer (4) exceeds a predetermined upper threshold value (HP),
**characterised in that** said control system, in response to the activation of a steam dispensing operation, immediately activates said command device (6) of the heating element (7), and **in that** said control system, in response to the activation of a steam dispensing operation when said refill device (5) is active, immediately deactivates said refill device (5) and keeps it inactive for all of the time in which the steam dispensing is in progress.

2. Machine according to claim 1, wherein said upper threshold value (HP) is equal to said lower threshold value (LP).

3. Machine according to claims 1 and 2, further comprising a plurality of heating elements (7A, 7B, 7C) of the boiler water and at least one auxiliary water heater (13), equipped with a water dispenser (10), with a temperature transducer (14), with a heating element (15) and with a command device (17) of the heating element (15), wherein said control system subordinates the joint activation of all of the heating elements (7A, 7B, 7C) of the boiler water (1) upon the condition that the heating element (15) of the auxiliary heater (13) is inactive and rules out the activation of at least one of the heater elements of the boiler water if the activation of the heating element of the auxiliary heater is required.

## Patentansprüche

1. Vorrichtung zu Erzeugung heißen Wassers, Dampfs und von Heißgetränken, von dem Typ mit einem Nassdampfsammelkessel (1), einem Dampfauslass-Strahlrohr (9), einem Heißwasserauslass (8), einem ersten Messfühler (3) für die Überwachung des Wasserstands in dem Kessel, einem zweiten Messfühler (4) für die Überwachung eines Druck-/ Temperaturparameters in dem Kessel, zumindest einem Heizelement (7) für das Wasser in dem Kessel, einer Nachfüllvorrichtung (5) für das Wasser in dem Kessel, einer Steuervorrichtung (6) des Heizelements, einem Steuersystem (11, 12) mit einer zentralen Recheneinheit (12), die in Reaktion auf das Anschalten eines Heißwasserauslassvorgangs unmittelbar die Steuervorrichtung (6) des Heizelements (7) aktiviert und, wenn der Temperatur-/ Druckparameter in dem Kessel, der durch den zweiten Messfühler (4) überwacht wird, größer als ein festgelegter unterer Grenzwert (LP) ist, die Nachfüllvorrichtung (5) aktiviert, diese in den Zeiträumen aktiv lässt, in denen der Temperatur-/ Druckparameter in dem Kessel, der durch den zweiten Messfühler (4) überwacht wird, größer ist als der untere Grenzwert (LP) bis zum Wiedererreichen eines hohen Wasserstandes (HL) in dem Kessel, der durch den ersten Messfühler (3) erfasst wird, und lediglich dann die Steuervorrichtung (6)des Heizelements (7) deaktiviert, wenn der Wasserstand in dem Kessel wieder erreicht wurde und der Druck/ Temperatur des Kessels, überwacht durch den zweiten Messfühler (4), einen festgelegten oberen Grenzwert (HP) überschreitet,
**dadurch gekennzeichnet,**
**dass** das Steuersystem in Reaktion auf das Anschalten eines Dampfauslassvorgangs unmittelbar die Steuervorrichtung (6) des Heizelements (7) aktiviert und dass das Steuersystem in Reaktion auf das Anschalten eines Dampfauslassvorgangs, wenn die Nachfüllvorrichtung (5) aktiv ist, unmittelbar die Nachfullvorrichtung (5)deaktiviert und für die gesamte Zeit, in der das Dampf-Auslassen stattfindet, inaktiv hält.

2. Vorrichtung nach Anspruch 1,
**wobei** der obere Grenzwert (HP) gleich dem unteren Grenzwert (LP) ist.

3. Vorrichtung nach Anspruch 1 oder 2,
weiter mit einer Mehrzahl an Heizelementen (7A, 7B, 7C) für das Kesselwasser und zumindest einem Hilfswassererhitzer (13), ausgestattet mit einem Wasserauslass (10), mit einem Temperaturmessfühler (15) und mit einer Steuervorrichtung (17) des Heizelements (15), wobei das Steuersystem die gemeinsame Aktivierung der gesamten Heizelemente (7A, 7B, 7C) für das Kesselwasser (1) der Bedingung unterwirft, dass das Heizelement (15) des Hilfserhitzers (13) inaktiv ist und die Aktivierung auch nur eines der Heizelemente für das Kesselwasser ausschließt, wenn die Aktivierung des Heizelements des Hilfserhitzers erforderlich ist.

## Revendications

1. Machine pour la production d'eau chaude, de vapeur et de boissons chaudes, du type comprenant une chaudière à accumulation de vapeur saturée (1), une lance de distribution de vapeur (9), un distributeur d'eau chaude (8), un premier transducteur (3) pour surveiller le niveau d'eau dans la chaudière, un second transducteur (4) pour surveiller un paramètre de pression/température dans la chaudière, au moins un élément chauffant (7) de l'eau dans la chaudière, un dispositif de remplissage (5) de l'eau dans la chaudière, un dispositif de commande (6) de l'élément chauffant, un système de commande (11, 12) avec une unité centrale (12) qui, en réponse à l'activation d'une opération de distribution d'eau chaude, active immédiatement ledit dispositif de commande (6) de l'élément chauffant (7) et, si le paramètre de pression/température dans la chaudière, surveillé par ledit second transducteur (4), est supérieur à une valeur de seuil inférieure (LP) prédéterminée, active également ledit dispositif de remplissage (5), en le maintenant actif pendant les intervalles de temps pendant lesquels le paramètre de pression/température dans la chaudière, surveillé par ledit second transducteur (4) est supérieur à ladite valeur de seuil inférieure (LP) jusqu'à ce que la restauration d'un niveau élevé (HL) d'eau dans la chaudière reconnu par ledit premier transducteur (3) et en désactivant ledit dispositif de commande (6) de l'élément chauffant (7) uniquement lorsque le niveau d'eau dans la chaudière a été restauré et la pression/température de la chaudière, surveillée par ledit second transducteur (4) dépasse une valeur de seuil supérieure (HP) prédéterminée,
**caractérisée en ce que** ledit système de commande, en réponse à l'activation d'une opération de distribution de vapeur, active immédiatement ledit dispositif de commande (6) de l'élément chauffant (7), et **en ce que** ledit système de commande, en réponse à l'activation d'une opération de distribution de vapeur lorsque ledit dispositif de remplissage (5) est actif, désactive immédiatement ledit dispositif de remplissage (5) et le maintient inactif pendant tout le temps pendant lequel la distribution de vapeur est en cours.

2. Machine selon la revendication 1, dans laquelle ladite valeur de seuil supérieure (HP) est égale à ladite valeur de seuil inférieure (LP).

3. Machine selon les revendications 1 et 2, comprenant en outre une pluralité d'éléments chauffants (7A, 7B, 7C) de l'eau de la chaudière et au moins un chauffe-eau auxiliaire (13), équipé d'un distributeur d'eau (10), avec un transducteur de température (14), avec un élément chauffant (15) et avec un dispositif de commande (17) de l'élément chauffant (15), dans laquelle ledit système de commande subordonne l'activation conjointe de tous les éléments chauffants (7A, 7B, 7C) de l'eau de la chaudière (1), à condition que l'élément chauffant (15) du chauffe-eau auxiliaire (13) soit inactif et écarte l'activation d'au moins l'un des éléments chauffants de l'eau de la chaudière si l'activation de l'élément chauffant du chauffe-eau auxiliaire est nécessaire.
